# DEMANDE DE BREVET EUROPEEN

(11) **EP 2 014 360 A1**
(43) Date de publication de la demande: **14.01.2009**
(21) Numéro de dépôt: 08159035.8
(22) Date de dépôt: 25.06.2008
(51) Int. Cl.: B01J 23/38, B01J 23/63, B01J 35/00, B01J 35/04, B01J 37/02, B01D 53/94

(54) **Dispositif de traitement des émissions gazeuses d'un moteur**

(30) Priorité: 11.07.2007 FR 0756414
(71) Demandeur: Peugeot Citroën Automobiles SA, 78943 Vélizy-Villacoublay Cedex (FR)
(72) Inventeur: Crehan, Gabriel, 75019, PARIS (FR); Colas, Hervé, 95130, FRANCONVILLE (FR); Quiney, Anne-Sophie, 75010, PARIS (FR); Jamal, Nazma, 75015, PARIS (FR); Bertin, Thierry, 92250, LA GARENNE-COLOMBES (FR); Blanchard, Gilbert, 60330, LAGNY-LE-SEC (FR); Castillo, Sofia, 92600, ASNIERES SUR SEINE (FR); Bideau, Amélie, 92400, COURBEVOIE (FR)
(74) Mandataire: Ménès, Catherine

(57) **Abrégé**

Dispositif de traitement des émissions gazeuses d'un moteur à explosion, comportant un support destiné à être traversé par lesdites émissions gazeuses et ayant une face d'entrée et une face de sortie pour lesdites émissions, et un revêtement catalytique revêtant les parois internes du support, ledit revêtement comportant, comme composants catalytiques, entre 0 et moins de 100% de métaux précieux et entre plus de 0 et 100% d'un ou plusieurs oxydes (MOₓ), caractérisé en ce que :
- ledit dispositif comporte une succession d'au moins deux zones entre sa face d'entrée et sa face de sortie, réparties selon la direction de progression des émissions gazeuses ;
- entre deux zones successives du dispositif, la quantité de métaux précieux dans le revêtement catalytique est décroissante.
- entre deux zones successives du dispositif, la quantité d'un ou plusieurs oxydes catalytique est croissante dans le sens inverse des métaux précieux.

## Description

La présente invention concerne le traitement des émissions gazeuses des moteurs à explosion, notamment de véhicules.

Les exigences réglementaires de plus en plus sévères en matière de réduction des émissions polluantes des moteurs à explosion des véhicules obligent les constructeurs automobiles à utiliser des convertisseurs catalytiques de plus en plus efficaces. Mais cela entraîne l'utilisation de quantités croissantes de métaux précieux, qui en sont les constituants actifs principaux. Cela augmente le coût des dispositifs de réduction des émissions polluantes, et le besoin croissant en métaux précieux provoque une augmentation des cours de ces matières qui aggrave ces problèmes de coûts.

Il est donc primordial de réduire les quantités de métaux précieux utilisées, en trouvant d'autres substances utilisables pour remplir leurs fonctions et/ou en optimisant la conception des réacteurs qui les renferment. C'est, en particulier, le cas pour les catalyseurs d'oxydation utilisés pour traiter les émissions de moteurs diesel, car ces émissions sont à une relativement faible température et l'exécution des réactions d'oxydation nécessite des quantités de substances catalytiques importantes. Mais tous les types de convertisseurs catalytiques sont concernés par ce problème.

Diverses tentatives dans cette direction ont été faites, par exemple :
- l'utilisation de zéolites comme pièges à hydrocarbures (HC) revêtant un support monolithique (US-B-6 936 561) ;
- l'utilisation d'une combinaison de zéolites et d'oxydes de Ce dopés au zirconium, couplée avec du Pt (EP-A-0 427 970) ou du Pd (DE-A-44 35 073) ou d'autres métaux précieux comme Ir, Rh et Ru (DE-A-39 40 758) ;
- l'utilisation d'une combinaison Pt-Pd au lieu de Pt seul (« Next Generation of Diesel Oxidation Catalyst for the Use with Catalysed Diesel Particulate Filters in Passenger Car Application », Aachener Kolloquium Fahrzeug-und Motorentechnik, 2005) ;
- une répartition non uniforme du catalyseur renfermant les métaux précieux dans le réacteur catalytique, dans laquelle la concentration en métaux précieux est plus élevée dans les canaux centraux du réacteur que dans ses canaux périphériques (US-A-2002/0042344).

On a également proposé l'utilisation de supports catalytiques non plus monolithiques, mais formés par la succession de deux briques au moins. La première brique, généralement de courte longueur, possède une relativement faible masse thermique (définie par le produit de la masse du matériau et de sa capacité calorifique), alors que la deuxième brique, généralement de plus grande longueur et en un matériau différent de celui de la première brique possède une masse thermique plus élevée. La première brique est efficace à bref délai après le démarrage du moteur car elle s'échauffe et devient active rapidement, et sa relativement faible longueur est néanmoins suffisante pour traiter les volumes de gaz assez faibles qui sont généralement en jeu au début du parcours du véhicule. La deuxième brique s'échauffe plus lentement et devient donc active plus tardivement. Mais sa grande longueur la rend apte à traiter les grandes quantités de gaz qui la traversent lorsque le véhicule est en régime de croisière à grande vitesse. En outre, son inertie thermique est suffisante pour éviter une désactivation du catalyseur lors des décélérations (voir le document FR 06 54 028).

Concernant les catalyseurs d'oxydation totale pour émissions de moteurs Diesel, la grande majorité sont réalisés en utilisant comme matériau catalytique un métal précieux (ou un mélange de métaux précieux) comme principal composant catalytique, dispersé sur un revêtement à large surface disposé lui-même sur un support monolithique. On a essayé d'autres matériaux tels que des oxydes métalliques et des mélanges de tels oxydes, ou des pérovskites (US-A-2005/0245391). Les oxydes métalliques permettent de catalyser les réactions d'oxydation totale, mais ont des températures d'activation plus élevées de 100 à 200°C que celles des métaux précieux, ce qui les rend peu efficaces. Afin de réduire ces températures d'activation, on peut les utiliser sous forme de nanoparticules, ce qui les rend plus actifs, et/ou on peut les mélanger à des métaux précieux en faible quantité.

Le but de l'invention est de parvenir à optimiser à la fois l'efficacité et le coût des éléments catalytiques pour le traitement des émissions gazeuses des moteurs, notamment en minimisant autant que possible la quantité de métaux précieux utilisée.

A cet effet, l'invention a pour objet un dispositif de traitement des émissions gazeuses d'un moteur à explosion, comportant un support destiné à être traversé par lesdites émissions gazeuses et ayant une face d'entrée et une face de sortie pour lesdites émissions, et un revêtement catalytique revêtant les parois internes du support, ledit revêtement comportant, comme composants catalytiques, entre 0 et moins de 100% de métaux précieux et entre plus de 0 et 100% d'un ou plusieurs oxydes catalytiques (MOₓ), caractérisé en ce que :
- ledit dispositif comporte une succession d'au moins deux zones entre sa face d'entrée et sa face de sortie, réparties selon la direction de progression des émissions gazeuses ;
- entre deux zones successives du dispositif, la quantité de métaux précieux dans le revêtement catalytique est décroissante.

Dans la dernière zone du dispositif, les composants catalytiques du revêtement peuvent être à 100% constitués d'oxydes MOₓ.

Entre au moins deux zones successives du dispositif, la quantité de métaux précieux peut décroître par paliers.

Au moins à l'intérieur d'une zone de dispositif, la quantité de métaux précieux peut décroître de façon continue.

Entre au moins deux zones successives du dispositif, la quantité d'oxydes catalytiques MOₓ peut être croissante.

Le support peut être composé d'une succession de briques de masses thermiques croissantes dans la direction de progression des émissions gazeuses.

Lesdits métaux précieux peuvent être choisis parmi Pt, Pd, Rh, Ru, Re, Ir, Au, Ag et leurs mélanges.

Lesdits oxydes peuvent être choisis parmi les oxydes de Sc, Ti, V, Cr, Mn, Fe, Co, Ni, Cu, Zn, Ce, Zr, Y, Pr et leurs mélanges.

Ce dispositif peut constituer un catalyseur d'oxydation totale.

Ce dispositif peut constituer un catalyseur de réduction catalytique sélective.

Ce dispositif peut constituer un piège à NOₓ, et lesdites nanoparticules peuvent être dopées au B ou au Mn.

Ce dispositif peut constituer un catalyseur trois voies.

Ledit support peut être un filtre à particules catalysé.

Ledit support peut être une mousse.

Comme on l'aura compris, l'invention repose d'abord sur une répartition des oxydes métalliques catalytiques et des métaux précieux variable selon les régions d'un dispositif de traitement des émissions gazeuses, tel par exemple qu'un catalyseur d'oxydation. Entre l'entrée et la sortie du dispositif, la quantité de métaux précieux est décroissante, alors que la quantité d'oxydes catalytiques est de préférence croissante.

Optimalement, l'invention est couplée à une conception multi-briques du support du catalyseur.

Dans le passé, on a proposé différentes solutions mettant en oeuvre des quantités de métaux précieux variables selon la région du dispositif où le revêtement catalytique est implanté. Mais on n'a jamais proposé de coupler une telle variation de la quantité de métaux précieux avec une utilisation d'oxydes catalytiques MOₓ, a fortiori de faire varier également la quantité de ces MOₓ en fonction de la région du dispositif. On n'a également jamais proposé de faire varier la répartition des éléments catalytiques sur un support multi-briques.

Selon l'invention, on revêt le support du dispositif de traitement d'un mélange catalytique d'oxydes métalliques catalytiques MOx et de métaux précieux MP, dans lequel la quantité de métaux précieux dans le revêtement est maximale en entrée du dispositif, puis décroît en direction de la sortie du dispositif jusqu'à, éventuellement, être nulle dans la dernière zone du dispositif. Simultanément, de préférence, la quantité d'oxydes catalytiques est, au contraire, croissante entre l'entrée et la sortie du dispositif. Elle n'est, toutefois, pas nulle dans la première zone du dispositif.

L'invention propose donc une répartition des matériaux dans le dispositif de traitement que l'on pourrait qualifier de « répartition croisée » des MP et des MOₓ.

On utilise de préférence un support multi-briques, dont la masse thermique des briques va croissant entre l'entrée et la sortie du dispositif. Mais le support peut aussi être constitué par un filtre à particules, qui devient ainsi un filtre à particules catalysé, ou une mousse.

On rappelle que les réactions catalytiques activées par les métaux précieux et les oxydes ne reposent pas sur les mêmes principes.

Les nanoparticules de métaux précieux permettent l'adsorption dissociative des polluants (CO, HC, NOₓ) sur leur surface à partir de la phase gazeuse. La dissociation des liaisons forme des espèces chimiques hautement mobiles et chargées qui se répandent sur le matériau (dit « washcoat ») dans lequel les métaux précieux sont intégrés, puis sont brûlées.

Les oxydes métalliques catalytiques MOₓ ont une bonne capacité à initier la combustion une fois que les molécules ont été adsorbées de manière dissociative, mais ont une faible capacité à provoquer cette adsorption dissociative. Pour cette raison leur efficacité globale est moindre que celle des métaux précieux. Mais un couplage des deux types de composés permet de surmonter cet inconvénient dans une certaine mesure. On n'a cependant pas encore réussi à atteindre une efficacité d'un tel revêtement catalytique égale à celle d'un revêtement ne comporte que des métaux précieux en grande quantité.

Ces oxydes métalliques catalytiques ont un volume important car ils sont fabriqués à partir de particules de grande surface et sont hautement poreux. Une augmentation ou une diminution de leur volume a donc une influence importante sur l'épaisseur du revêtement catalytique. Ils ont un double rôle : outre leurs propriétés catalytiques, ils constituent un support pour les nanoparticules de MP.

Les MP n'existent dans le revêtement catalytique que sous forme de nanoparticules, de manière à les répartir dans une zone donnée du revêtement de la manière la plus homogène possible, et aussi pour faciliter leur dispersion dans la structure ouverte du revêtement, de manière à limiter les problèmes de transfert de masses dans le revêtement catalytique. Une modification de la quantité de MP présente dans le revêtement n'a pas d'influence très sensible sur le volume du revêtement, et donc sur l'épaisseur des parois du dispositif revêtu.

Les inventeurs ont déterminé que l'imposition au revêtement catalytique de quantités de MP et de MOₓ respectivement décroissante et croissante entre la face d'entrée et la face de sortie d'un catalyseur d'oxydation, et de préférence, le couplage entre, d'une part, l'utilisation d'un tel revêtement catalytique et, d'autre part, l'utilisation préférée d'un support de catalyseur comportant plusieurs briques de masses thermiques croissantes dans la direction de transfert des émissions gazeuses, permettaient de parvenir à une optimisation de l'efficacité du catalyseur d'oxydation et du coût de son revêtement catalytique. En particulier, une synergie entre l'amorçage rapide, même à faible température, du catalyseur de la première brique et l'inertie thermique de la ou des brique(s) suivante(s) permet d'utiliser optimalement au moins dans la ou les zones terminales du catalyseur d'oxydation des revêtements à relativement faible teneur en métaux précieux, voire exempts de métaux précieux dans la zone terminale, qui n'auraient pas été acceptables s'ils étaient utilisés seuls sur la totalité d'une brique unique constituant le support.

Cette synergie est réalisée, selon l'invention, en prévoyant simultanément :
- qu'en valeur absolue, la quantité d'oxyde(s) catalytique(s) MOₓ est constante, voire de préférence croissante entre l'entrée et la sortie du support constituant le dispositif de traitement des gaz ;
- qu'en valeur absolue, la quantité de métaux précieux MP est décroissante entre l'entrée et la sortie de ce même support, et peut éventuellement être nulle dans la dernière zone du support ;
- et que le support du catalyseur est de préférence constitué par une succession de briques de masses thermiques croissantes de l'entrée vers la sortie des émissions, au nombre d'au moins deux.

Le catalyseur revêtant le support présente donc un rapport MP/MOₓ décroissant entre la face d'entrée et la face de sortie du support.

Les quantités de MP et MOₓ dans le revêtement peuvent varier par paliers ou de manière plus ou moins continue. Le cas le plus simple est celui où chaque brique présente un revêtement de quantité déposée et de composition identique dans tout son volume, les changements de quantité et de composition du revêtement sur le parcours des émissions gazeuses s'effectuant donc de façon discontinue à chaque changement de brique. Mais on peut aussi envisager le cas où à l'intérieur d'au moins une des briques, la composition et/ou la quantité déposée de son revêtement évoluerait entre la face d'entrée et la face de sortie, cette évolution pouvant se faire elle-même par paliers ou de manière sensiblement continue. De même, il demeurerait dans l'esprit de l'invention de prévoir une évolution sensiblement continue de la quantité déposée et/ou de la composition du revêtement sur l'ensemble de la longueur du catalyseur. Cela reviendrait à prévoir un nombre infini de zones.

L'invention a pour avantages :
- de réduire le coût d'un catalyseur d'oxydation (ou d'autres types de dispositifs de traitement) grâce à la réduction de la quantité globale de MP utilisée, la quantité plus faible de MP dans les dernières zones du catalyseur étant compensée par une augmentation de la quantité d'oxydes catalytiques MOₓ dans ces mêmes zones pour maintenir l'efficacité du catalyseur ;
- dans sa version préférée à support multi-briques, de mieux exploiter la synergie entre un support multi-briques et un revêtement mixte MP/oxydes qu'avec un revêtement de composition uniforme ;
- de ne pas nécessiter de modifications d'une ligne d'échappement préexistante si, comme cela est souvent possible, on peut remplacer le dispositif de traitement classique initialement prévu par un dispositif selon l'invention plus efficace mais ayant le même encombrement.

Selon l'invention, on doit respecter les conditions suivantes dans la fabrication du dispositif de traitement :
- la quantité de MP est maximale dans la zone d'entrée des émissions gazeuses du dispositif ;
- la quantité de MOₓ est maximale dans la zone de sortie des émissions gazeuses du dispositif ;

Si le dispositif présente des zones intermédiaires définies entre les deux zones précédemment citées, le ratio MP/MOₓ décroît donc d'une zone à la zone suivante dans la direction de progression des émission gazeuses.

Dans la pratique, la décroissance et la croissance des quantités respectives de MP et MOₓ et l'évolution du ratio MP/MOₓ qu'elles entraînent s'effectuent le plus simplement par paliers, autrement dit ces valeurs sont constantes à l'intérieur d'une zone du dispositif et diminuent brutalement au passage dans la zone suivante. Mais on peut aussi envisager que sur une partie ou la totalité du dispositif, l'une au moins de ces évolutions se fasse de manière progressive et sensiblement continue.

Dans une configuration multi-briques du dispositif de traitement, la brique ayant la plus faible masse thermique est située du côté de l'entrée des émissions gazeuses, et la brique ayant la plus forte masse thermique est située du côté de la sortie des émissions gazeuses. S'il y a des briques intermédiaires entre les deux précédentes, leurs masses thermiques vont en croissant dans la direction de progression des émissions gazeuses.

La présence de la quantité maximale de MP en entrée du dispositif de traitement garantit que l'initiation de la catalyse s'effectuera dès le début du fonctionnement du moteur, a fortiori si cette quantité maximale de MP est associée à un support à faible masse thermique, facile à échauffer même lorsque des émissions gazeuses relativement froides et en faible quantité l'ont traversé. Et le fait d'avoir diminué la quantité de métaux précieux dans la partie terminale du dispositif, voire même de les y supprimer, permet de réaliser des économies sur un matériau coûteux, en ne l'employant que là où il est assurément nécessaire. Dans cette partie terminale, l'efficacité du revêtement catalytique relativement riche en oxydes catalytiques MOₓ et relativement pauvre en MP, voire dépourvu de MP, est optimalement accentuée par l'inertie thermique d'un support à masse thermique élevée. Cela évite un désamorçage de la réaction catalytique dans cette partie terminale lors des baisses de régime du moteur.

De préférence, la quantité de revêtement catalytique de type MOₓ déposée sur les différentes zones du dispositif de traitement augmente en direction de la sortie du dispositif. Il faut, comme d'habitude, veiller à ce que la géométrie des canaux du dispositif ainsi revêtu ne crée pas de pertes de charge anormalement élevées. Mais l'invention s'avère avantageuse de ce point de vue.

Par exemple, pour un monolithe de 400 cpsi (cells per square inch », autrement dit « cellules par pouce carré » , qui est l'unité couramment utilisée par les hommes du métier), on ne dépasse habituellement pas une quantité déposée de 200 g/l de matériau catalytique.

Normalement, l'épaisseur du revêtement catalytique à l'intérieur des canaux du dispositif de traitement des gaz, et qui est fonction notamment de la quantité de revêtement déposée, doit être limitée pour deux raisons. Il faut d'abord limiter la contre-pression générée par la faible section des canaux disponible pour le passage des gaz. Il faut également limiter les risques de bouchage des canaux par les particules de suies, notamment à l'entrée du monolithe. Un avantage de l'invention est, précisément, de sécher les particules de suies à leur entrée dans le monolithe grâce à la quantité élevée de MP présente dans cette zone, ce qui réduit les risques de bouchage. En conséquence, on peut se permettre d'augmenter l'épaisseur du revêtement, donc la quantité globale d'oxydes catalytiques MOₓ déposée sur les parois. Par exemple pour un monolithe de 400 cpsi, on peut déposer entre 200 et 600 g/ft³ (grammes par pied cube, qui est, là encore, la seule unité couramment utilisée par les hommes du métier), de préférence entre 200 et 300 g/ft³ de MOₓ vers la sortie du monolithe.

Comme exemples de matériaux utilisables pour le support d'un catalyseur d'oxydation selon l'invention, il y a tous les matériaux céramiques, organiques, organométalliques ou métalliques habituellement utilisés à cet effet. On peut citer notamment B₄C, Si₃N₄, BN, AIN, Al₂O₃, ZrO₂, la mullite, AlTi, ZrB₂, TiO₂, CeO₂, Y₂O₃, SiO₂, Fe, le SiAlON^{®}, le carbone, des polymères organiques, la cordiérite. Le support est fabriqué par les techniques habituelles à cet effet. Les documents JP-A-3-271152 et JP-A-3-371152 décrivent des exemples non limitatifs de tels supports avec leur procédé de fabrication.

Le MP utilisables sont notamment (liste non limitative) Pt, Pd, Rh, Ru, Re, Ir, Au, Ag. Ils peuvent être utilisés seuls ou en combinaison, par exemple sous forme de Pt-Pd, Rh-Pt, Pt-Pd-Rh, Pt-Pd-Au... Ils sont présents sous forme de nanoparticules de diamètre 0,3 à 50 nm, dispersées dans un « washcoat » (couche support) dont on donnera des exemples plus loin.

Les MOₓ utilisables sont notamment des oxydes de métaux de transition ou d'actinides ou de lanthanides et leurs mélanges. On peut citer à cet effet les oxydes de Sn, Sc, Ti, V, Cr, Mn, Fe, Co, Ni, Cu, Zn, Ce, Zr, Y, Pr. Ils peuvent être présents sous forme de nanoparticules de diamètre 0,3 à 50 nm dispersées dans un washcoat identique ou comparable à celui des MP. Egalement, le même MOₓ catalytique peut être présent sous forme de particules plus grosses (5 nm à 10 µm) mais ayant une grande surface développée, typiquement 10 à 400 m²/g, car une grande surface développée favorise une dispersion optimale des MP et une efficacité optimale des MOₓ.

Dans la ou les zones où les MP et les MOₓ sont présents conjointement (le cas le plus général), le washcoat est évidemment le même.

Pour revêtir un catalyseur d'oxydation totale destiné à oxyder le CO, les hydrocarbures et à former du NO₂ à partir des NOx, on peut notamment utiliser :
- un washcoat typiquement composé d'un ou plusieurs composés choisis parmi Al₂O₃, TiO₂, ZrO₂, CeO₂, Y₂O₃;
- comme catalyseur, des nanoparticules de MP tels que Pt, Pd, Rh, Ru, Re, Ir, Au, Ag, des oxydes de métaux de transition et leurs oxydes, des actinides et leurs oxydes, des pérovskites, des zéolites éventuellement dopées au Cu, ou au Fe ou au Mn, des argiles éventuellement dopées au Cu, ou au Fe ou au Mn ; selon l'invention, le catalyseur comporte une quantité variable de MP et d'oxydes MOₓ, la quantité de MP étant décroissante de l'entrée à la sortie du catalyseur d'oxydation et la quantité de MOₓ étant croissante dans la même direction ;
- un support classiquement formé d'une, ou de préférence, plusieurs briques monolithiques ou constitué par un filtre à particules diesel ; dans ce dernier cas, si, comme il est classique, le filtre comporte un support en nid d'abeille avec des canaux d'entrée et des canaux de sortie séparés par des parois poreuses, un revêtement relativement riche en MP est déposé dans les canaux d'entrée du filtre et un revêtement plus pauvre en MP que le précédent est déposé dans les canaux de sortie du filtre.

L'invention est également applicable avec profit aux filtres à particules catalysés destinés à détruire les hydrocarbures HC, les particules de suies et le CO. Les mêmes substances que celles citées pour les catalyseurs d'oxydation peuvent être utilisées auxquelles on peut ajouter SiO₂ parmi les constituants possibles du washcoat. Le revêtement est déposé sur les parois filtrantes et/ou dans les parois filtrantes..

L'invention est également applicable avec profit aux pièges à NOx qui captent les NOx des émissions gazeuses et oxydent les HC et les CO dans un support mono ou multi-briques. Les mêmes matériaux de base que pour les catalyseurs d'oxydation peuvent être utilisés, mais les nanoparticules sont, de plus, dopées au B ou au Mn.

On va à présent donner des exemples détaillés de mise en oeuvre de l'invention.

Dans ces exemples, on utilise des zéolites conjointement à d'autres oxydes métalliques qui servent de support à des métaux du groupe du Pt (platinoïdes). Il est important pour une bonne mise en oeuvre de l'invention que les platinoïdes ne soient déposés que sur les oxydes supports et non sur les zéolites. Un dépôt sur les zéolites diminuerait l'efficacité du catalyseur. Le ratio zéolites/oxydes supports peut varier ou demeurer constant longitudinalement et/ou radialement à l'intérieur de l'élément, qu'il soit mono ou multibriques.

Le dépôt des platinoïdes sur les oxydes métalliques supports peut être réalisé de différentes manières. Il est important que la méthode choisie assure l'obtention d'un dépôt aussi uniforme et finement réparti des platinoïdes sur les oxydes.

Un procédé possible consiste à imprégner les oxydes métalliques, avant de les mélanger aux zéolites, par une solution de précurseurs solubles des platinoïdes. On utilise à cet effet, de préférence, des solutions aqueuses.

De tels précurseurs des platinoïdes peuvent être des sels et complexes de sels de ces platinoïdes. On peut citer comme exemples l'acide hexachloroplatinique, l'acide tétrachloroplatinique, le chlorure de diamine-dinitroplatine(Il), le chlorure de tétraamineplatine(II), le tétrachloroplatinate(II) d'ammonium, l'hexachloroplatinate(IV) d'ammonium, le dichloroéthylènediamine de platine, le nitrate de tétraamine-platine(II), l'hydroxyde de tétraamine-platine(II), l'hydroxyde de méthyléthanolamine-platine(II),le nitrate de platine, le chlorure de palladium, le nitrate de palladium, le diaminedinitropalladium(II), l'hydroxyde de tétraamine-palladium(II) et l'acide d'hexachloroiridium .

Pour imprégner les oxydes métalliques, ceux-ci sont placés au contact d'une solution aqueuse du ou des platinoïde(s) sous agitation constante de manière à produire une poudre humide. Le volume de solvant est choisi de manière à correspondre à environ 100 à 130%, de préférence 110%, de la capacité d'absorption de l'eau par l'oxyde métallique à imprégner. Après séchage pendant environ 1 à 3 heures à une température élevée de 80 à 140°C, la poudre obtenue est calcinée dans l'air à 200-500°C, de préférence 300°C, pendant 1 à 4 heures, puis réduite dans un courant gazeux hydrogéné, de préférence composé de préférence de 95% d'azote et 5% d'hydrogène. Dans cette étape une température de 300 à 600°C est utilisée, de préférence 500°C. La réduction est complète après environ 1 à 3 heures. Des examens au microscope électronique montrent que les platinoïdes déposés sur la surface des oxydes métalliques sont finement répartis, avec des tailles de cristallites entre 10 et 50 nm.

Pour l'utilisation de ce procédé, divers ratios platinoïdes/oxydes métalliques sont réalisables, Les oxydes métalliques peuvent être revêtus d'une quantité de 0,01 à 10% en poids de platinoïdes, par rapport au poids total oxydes métalliques imprégnés. Les oxydes métalliques en question peuvent comprendre des nanoparticules solides et des oxydes poreux et semi-poreux tels que des pérovskites, voire des zéolites. Mais de préférence, cependant, il vaut mieux ne pas utiliser les zéolites comme support pour les platinoïdes parce qu'ils sont trop fragiles. Les zéolites utilisés comme oxydes catalytiques doivent de préférence être attachés au revêtement séparément des platinoides.

Les oxydes métalliques peuvent avoir diverses fonctions. Des oxydes à surface spécifique élevée (de l'ordre de 10 m²/g) peuvent être utilisés pour disperser les platinoïdes et aussi des oxydes métalliques ayant des actions catalytiques significatives à basse température (typiquement en dessous de 250°C). Des exemples de tels oxydes sont Al₂O₃, TiO₂, ZrO₂, CeO₂, Y₂O₃. On peut utiliser ces oxydes seulement comme un support catalytique pour les MP ou on peut utiliser ces oxydes aussi comme élément catalytique. Mais il est préférable d'avoir au moins une faible quantité de MP (≥ 5g/ft₃) présente pour faciliter l'adsorption dissociative des polluants à faible température sur les oxydes.

Le ou les oxyde(s) métallique(s) peuvent être dopés avec, par exemple, des oxydes de terres rares, dans le but de stabiliser leur surface spécifique.

Concernant les zéolites utilisés pour constituer le catalyseur actif principal, voire unique, de la ou des zones terminales de l'élément, on les mélange aux oxydes métalliques additivés de MP avec des ratios pondéraux oxydes métalliques/zéolites de 10 :1 à 1 :3, de préférence de 6 :1 à 2 :1.

Dans le mélange catalytique, les zéolites ont pour fonction principale de stocker les HC contenus dans les gaz d'échappement à des basses températures (moins de 150 à 200°C), notamment dans le cas des moteurs diesel, de manière à les libérer lorsque ces gaz atteignent des températures plus élevées. A ces températures plus élevées, les HC désorbés sont partiellement oxydés par les oxydes métalliques catalysés, pour être transformés en CO et en eau. La fraction non oxydée des HC agit, en plus du CO, comme agent réducteur dans la réduction catalytique des oxydes d'azote des gaz d'échappement. Les zéolites typiquement utilisés sont par exemple : les H-Mordenite, H-ZSM5, DAY Na ZSM5, BEA, USY, ZSM22, etc... On admet généralement que des ratios Si/Al élevés doivent être utilisés pour améliorer la stabilité thermique des zéolites. On recommande typiquement des rapports Si/Al de 2 à 400, de préférence 50 à 200 parce que ces ratios sont thermodynamiquement les plus stables. On peut utiliser un ou plusieurs zéolites, généralement ajoutés dans des proportions similaires. Egalement, les zéolites utilisés peuvent être du type Na⁺ ou H⁺. Le rapport en poids entre les divers zéolites peut varier dans de larges limites.

Dans l'invention, les zéolites, pérovskites et argiles sont aussi considérés autant comme des oxydes métalliques que comme des absorbeurs de HC du fait de leur aspect microporeux. Plus précisément, ce sont des oxydes métalliques structurés ayant une fonction catalytique. Ainsi, la masse totale de MOₓ inclut aussi bien les oxydes métalliques solides que les oxydes métalliques poreux.

Pour la purification des gaz d'échappement des moteurs diesel, on a besoin de revêtements catalytiques à raison de 50 à 400 g/l de matériau monolithique support en nid d'abeilles. La composition du catalyseur doit être ajustée de sorte que les composants à activité catalytique déposés sur les oxydes métalliques sont présents à une concentration de 0,01 à 5 g/l de volume de monolithe support en nid d'abeilles.

En général, 200 g/l de revêtement catalytique et de washcoat sont utilisés pour limiter l'influence de la contre-pression créée par le monolithe. En utilisant la stratégie d'une répartition variable des MP et MOₓ, une variation minimale de ± 10% de MP par rapport à la masse totale de MP et MOₓ doit être de préférence respectée. En dessous de cette limite, les bénéfices retirés de cette configuration en termes d'efficacité catalytique et d'économies financières sont en général insuffisants. De plus, on s'accorde à penser actuellement que les procédés de production utilisés par les producteurs de revêtements catalytiques ne garantissent pas un profil de concentration de ces catalyseurs ayant une précision de moins de 10%.

Le mélange catalytique obtenu peut être additivé notamment par des liants inorganiques (sol de silice par exemple), des agents porogènes, des plastifiants et/ou des humidifiants, tout ceci d'une manière connue, en vue de le mettre sous forme d'éléments moulés tels que des pastilles et des extrudats, qui pourront ensuite être utilisés pour le revêtement de l'élément catalytique. Cependant, le mode préféré de revêtement du monolithe est l'application du catalyseur sous forme d'une couche de revêtement des parois internes des canaux d'un monolithe en nid d'abeilles.

Cette application est effectuée d'une manière connue en elle-même, notamment par les documents EP-A-0 427 970, US-A-2003/0176280, US-A-2003/0162650. Ainsi par exemple, le mélange catalytique d'oxyde(s) métallique(s) activé(s) et de zéolite(s) est d'abord mis sous forme d'une dispersion aqueuse. Un sol de silice, par exemple, peut y être ajouté en tant que liant. La viscosité de la dispersion peut être ajustée par des additifs adaptés de sorte qu'il peut devenir possible d'appliquer la quantité de matériau de revêtement nécessaire sur les parois des canaux en une seule étape. Sinon, la procédure de revêtement peut être réalisée en plusieurs étapes, séparées par des séchages assurant la fixation de la couche venant d'être appliquée. Le revêtement final est ensuite séché à haute température et calciné dans l'air pendant 1 à 4 heures entre 300 et 600°C.

On va à présent décrire des exemples de mise en oeuvre de l'invention en comparaison avec des exemples relevant de l'art antérieur.

### Exemple 1

On prépare deux lots de matériau catalytique sous forme de poudre.

Le premier lot A, un mélange de CeO₂ et de ZrO₂ à 5% de ZrO₂, avec une surface spécifique de 110m²/g, est activé avec du Pt. A cet effet le mélange CeO₂/ZrO₂ est mis en contact avec une solution aqueuse d'hydroxyde de tétraamine-platine(II) sous agitation permanente, pour obtenir une poudre humide. Après séchage de 2 h à 120°C à l'air, la poudre est calcinée dans l'air à 300°C pendant 2 h. Elle est ensuite réduite dans un courant gazeux de 95% de N₂ et 5% de H₂ en volume à 500°C pendant 2h. La poudre de Pt-CeO₂/ZrO₂ obtenue contient 2,5% en poids de Pt.

Le deuxième lot B est préparé de la même façon que le lot A, mais en diffère par une teneur en Pt du mélange final qui est de 0,5% en poids.

Des dispersions aqueuses de revêtement sont préparées à partir des lots de poudre A et B. Un monolithe en nid d'abeilles de cordiérite de 400 cpsi de dimensions 14 x 12,5 cm est utilisé comme support. Dans les 5 premiers cm de la longueur du support on dépose un revêtement catalytique de 160 g/l du lot A par immersion partielle du support dans la dispersion aqueuse de A. Le revêtement est séché pendant 2 h à 120°C dans l'air. La portion restante de 7,5 cm de long non encore imprégnée du support est ensuite immergée de la même façon dans la dispersion aqueuse de B à raison de 250 g/l de revêtement. Celui-ci est ensuite séché pendant 2 h à 120°C dans l'air, puis calciné pendant 2 h à 500°C. La calcination après le séchage du deuxième revêtement s'applique au deux revêtements simultanément.

### Exemple 2

On prépare un mélange catalytique et un support d'une manière similaire à celle de l'exemple 1. Mais au lieu de n'utiliser qu'un mélange CeO₂/ZrO₂ à 5% de ZrO₂, on utilise un mélange à 50% en poids de ce CeO₂/ZrO₂ et de 50% en poids d'un mélange de Al₂O₃/SiO₂ à 5% en poids de SiO₂. La surface spécifique est de 250 m²/g.

### Exemple 3

Un mélange catalytique identique à celui de l'exemple 2 est réalisé. Mais au lieu d'utiliser un support monolithique à brique unique, on répartit le mélange sur deux briques séparées que l'on assemble ensuite pour former l'élément catalytique. Les deux briques ont une masse de 400 cpsi et un diamètre de 14cm. La brique amont a 5 cm de long et la brique aval 3 cm de long. Les deux sont en cordiérite.

### Exemple 4

Un autre mélange catalytique conforme à l'exemple 2 est préparé. Au lieu d'utiliser un monolithe constitué d'une brique unique, on utilise deux briques séparées qui sont ensuite assemblées. La première brique est composée de feuillards laminés de d'acier inoxydable de masse équivalente de 400 cpsi et d'épaisseur 0,2 mm. La deuxième brique est en Al₂O₃ de masse 400 cpsi, de surface spécifique 70 m²/g et d'épaisseur de paroi de 0,6 mm.

### Exemple 5

Dans cet exemple on prépare 3 lots de catalyseur.

Le premier lot A est un mélange CeO₂/ZrO₂ à 10% en poids de ZrO₂, avec une surface spécifique de 105 m²/g et imprégné de Pd. A cet effet, la poudre de CeO₂/ZrO₂ est mise en contact avec une solution aqueuse de diaminedinitropalladium(II) sous agitation permanente, pour produire une poudre humide. Après séchage pendant 2 h à 120°C dans l'air, la poudre est calcinée pendant 2 h à 300°C dans l'air. Elle contient 3% en poids de Pd par rapport à son poids total. Une dispersion aqueuse à 40% de solides est préparée à partir de cette poudre.

Le deuxième lot B diffère du lot A sur la teneur en Pd imprégnant la poudre qui est de 0,5%. Le mode de préparation est le même.

Le troisième lot C est identique aux lots A et B, mise à part la teneur en Pd imprégnant la poudre qui est de 0,15%.

Aux trois lots A, B et C on ajoute 20% en poids sec d'un mélange de zéolites. Ces zéolites sont sous forme de poudres avec une granulométrie de 0,5 à 1 micromètre de préférence et en proportions molaires égales dans le mélange, et sont DAY (x=200), Na-ZSM5 (x>1000), H-ZSM5 (x=120), H-ZSM5 (x=40) et H-mordenite (x=20).

Les trois lots imprègnent trois briques en nid d'abeilles. La première brique est en feuillards d'acier inoxydable laminés avec un équivalent cpsi de 300, une épaisseur de parois de 0,075mm et une longueur de 5 cm. La deuxième brique est en Al₂O₃ avec un cpsi de 400, une épaisseur de parois de 0,15mm et une longueur de 5 cm. La troisième brique est en cordiérite avec un cpsi de 400, une épaisseur de paroi de 0,15mm et une longueur de 7,5 cm.

La première brique, constituant la partie d'entrée de l'élément catalytique, est revêtue de 160 g/l d'un mélange du lot A (CeO₂/ZrO₂ imprégné de Pd) et de zéolites, par immersion dans la dispersion de revêtement. Le revêtement est séché dans l'air à 120°C et calciné pendant 2 h à 500°C. La deuxième brique est revêtue de la même façon par 200 g/l d'un mélange réalisé à partir du lot B. La troisième brique est revêtue de la même façon par 250 g/l d'un mélange réalisé à partir du lot C.

### Exemple 6

Cet exemple est comparable à l'exemple 5, à ceci près que les zéolites ne sont pas mélangés aux lots A, B et C. On les met séparément sous forme d'une dispersion aqueuse à 40% de solides, dont on imprègne chaque brique par immersion à raison de 50 g/l sur toutes les briques. Après séchage pendant 2 h à 120°C dans l'air, la poudre est calcinée pendant 2 h à 300°C dans l'air. Ensuite, la première brique est imprégnée de 100 g/l du lot A, la deuxième brique est imprégnée de 150 g/l du lot B et la troisième brique est imprégnée de 200 g/l du lot C.

### Exemple 7

Cet exemple est identique à l'exemple 6, en ce que les zéolites sont d'abord imprégnées séparément sur les monolithes, et en ce que les mélanges d'oxydes et de Pd sont ensuite imprégnés sur les monolithes.

On prépare le même mélange de zéolites que dans l'exemple 5 en formant une dispersion aqueuse à 40% de solides. Les zéolites sont imprégnés par immersion directement seulement sur les deuxième et troisième briques en nid d'abeilles, à raison de 50 g/l pour chacune. La première brique en nid d'abeilles, en métal laminé, n'est pas imprégnée de zéolites. Après séchage de 2h à 120°C dans l'air, la poudre obtenue est calcinée pendant 2 h à 300°C dans l'air. La première brique est imprégnée de 150 g/l du lot A, la deuxième brique est imprégnée de 150 g/l du lot B et la troisième brique est imprégnée de 200 g/l du lot C.

### Exemple 8

II est identique à l'exemple 7, à ceci près que l'on utilise une brique de cordierite unique. Les imprégnations des zéolites et des mélanges CeO₂-ZrO₂-Pd sont réalisées avec les mêmes proportions et quantités que dans l'exemple 7 dans les zones respectives, dont les longueurs sont 5 cm pour la zone amont, 5 cm pour la zone médiane et 7,5 cm pour la zone aval.

### Exemple 9

Cet exemple utilise un monolithe de cordiérite unique.

Deux lots de matériau catalytique à base d'Al₂O₃-TiO₂-Pt-Pd sont préparés.

Le premier lot A' est une dispersion aqueuse à 40% de solides constitués, en % de matière sèche, de 60% d'alumine (de surface spécifique 180 m²/g) et 40% d'oxyde de Ti (surface spécifique 50 m²/g). La dispersion aqueuse est mise au contact d'une solution aqueuse de nitrate de tétraamineplatine (II) et d'hydroxyde de tétraamineplatine(II) sous agitation constante, pour produire une poudre humide. Après séchage pendant 2 h à 120°C dans l'air, la poudre obtenue est calcinée pendant 2 h à 300°C dans l'air. Une réduction dans un courant gazeux d'azote (95% en volume) et d'hydrogène (5%) en volume est réalisée à 500°C pendant 2h. La poudre d'alumine et d'oxyde de Ti obtenue contient 4,5% de Pt-Pd dans un ratio molaire de 4 :1.

Le deuxième lot B' est préparé selon la même procédure, mais la poudre finale d'alumine et d'oxyde de Ti contient 0,5% de Pt-Pd dans un rapport molaire de 4 :1.

A l'aide de ces deux lots A' et B' on prépare des dispersions aqueuses à 40% en poids de solides. Un support monolithique de cordiérite en nid d'abeilles (400 cpsi) de 14 x 12,5 cm est utilisé. Sur les 5 premiers cm du monolithe on dépose 180 g/l d'oxydes du premier lot A' par immersion partielle du monolithe dans la dispersion de revêtement. Le revêtement est séché pendant 2 h à 120°C dans l'air. La deuxième partie non imprégnée du monolithe est immergée ensuite de la même façon dans la solution du lot B' jusqu'au niveau 7,5 cm de manière à s'arrêter au niveau du matériau obtenu à partir du lot A'. L'imprégnation finale du lot B' est de 300 g/l. Le revêtement de la deuxième partie est séché pendant 2 h dans l'air puis les revêtements sont calcinés dans un four à l'air pendant 2h à 500°C. La calcination finale concerne les deux revêtements simultanément.

### Exemple 10

II est identique à l'exemple 9, à ceci près que dans le lot B' on utilise un ratio molaire Pt : Pd de 2 :1. On obtient donc deux ratios Pt-Pd différents dans la première et la deuxième partie du monolithe avec un zonage des oxydes MOₓ.

### Exemple 11

Cet exemple utilise un zonage central tel que décrit précédemment dans US-A-2002/0042344. On prépare deux lots A' et B' conformément à l'exemple 9.

Un monolithe unique en cordiérite de 400 cpsi est utilisé. Son diamètre est de 14 cm et sa longueur 15 cm.

Une membrane de silicone est placée sur la partie centrale du monolithe et a un diamètre de 7,5 cm. La membrane de silicone est placée aux extrémités opposées de la brique monolithique pour assurer une étanchéité parfaite de la zone centrale. Le monolithe est ensuite totalement immergé dans le lot B'. Le revêtement, qui s'est déposé seulement dans les canaux périphériques du monolithe, est ensuite séché pendant 2 h à 120°C dans l'air.

La partie périphérique imprégnée du monolithe est ensuite recouverte d'une membrane de silicone sur sa face d'entrée et sur sa face de sortie. Le monolithe est ensuite totalement immergé dans le lot A'. Le revêtement, qui s'est déposé uniquement dans les canaux centraux du monolithe, est séché pendant 2 h à 120°C, puis calciné pendant 2h à 500°C en même temps que le revêtement des canaux périphériques.

L'imprégnation finale est de 250 g/l pour les canaux périphériques (lot B') et de 180 g/l pour les canaux centraux (lot A').

### Exemple 12

Le catalyseur de cet exemple est préparé comme celui de l'exemple 9, mis à part que des pérovskites sont aussi ajoutées au mélange MOₓ d'alumine et de bioxyde de Ti. Dans cet exemple la pérovskite utilisée est de formule La_{0,4}Sr_{0,6}Co_{0,95}Pt_{0,05}O₃.

Le premier lot A' est une dispersion aqueuse à 40% de solides. Elle contient, en référence à la matière sèche, 50% en poids d'alumine (de surface spécifique 180 m²/g), 20% de TiO₂ (surface spécifique 50m²/g) et 30% de pérovskite. La dispersion est mise au contact d'une solution aqueuse de nitrate de tétraamine-platine(II) et d'hydroxyde de tétraamine-paliadium(II) sous agitation constante, pour produire une poudre humide. Après séchage de 2 h dans l'air, la poudre est calcinée pendant 2 h à 300°C dans l'air. Une réduction dans un courant de 95% en volume d'azote et 5% en volume d'hydrogène est effectuée. La poudre Al₂O₃-TiO₂ obtenue contient 4,5% en poids d'un mélange Pt/Pd dans un ratio molaire de 4 :1.

Le deuxième lot B' est préparé selon la même procédure, mais la poudre Al₂O₃-TiO₂ finale contient 0,5% en poids de Pt-Pd dans un ratio molaire de 4 :1.

Un support monolithique identique à celui de l'exemple 9 est ensuite revêtu dans les mêmes conditions en utilisant les lots A' et B' que l'on vient de décrire.

### Exemple 13

Cet exemple utilise une brique monolithique unique en cordiérite et décrit un catalyseur formant piège à NOₓ conforme à l'invention.

Deux lots A" et B" de matériau catalytique sont préparés, contenant les composés Al₂O₃-TiO₂-CeO₂-ZrO₂-PrO₂-MgO-Al₂O₃ BaCO₃ (60-15-15-3-1-1-5) et Pt-Pd-Rh (dans des ratios molaires de 10-5-1).

Avec le premier lot A", une dispersion aqueuse à 40% de solides est préparée. Par rapport aux matières sèches, la dispersion contient en poids 60% d'alumine de 180 m²/g de surface spécifique et 15% de TiO₂ de 50 m²/g de surface spécifique, constituant un washcoat de grande surface spécifique. A ce mélange sont ajoutés les composés actifs suivants, sous agitation constante : BaCO₃ (5%), ZrO₂ (3%), CeO₂ (15%), MgO-Al₂O₃ (1 %), PrO₂ (1%). La dispersion est mise au contact d'une solution aqueuse de nitrate de tétraamineplatine(II), d'hydroxyde de tétraaminepalladium(II) et d'hydroxyde de diaminerhodium, sous agitation constante, pour produire une poudre humide. Après séchage pendant 2 h à 120°C dans l'air la poudre est calcinée pendant 2 h à 300°C dans l'air. Une réduction dans un courant gazeux d'azote (95% en volume) et d'hydrogène (5% en volume) est effectuée à 500°C pendant 2h. La poudre Al₂O₃-TiO₂-CeO₂-ZrO₂-PrO₂-MgO-Al₂O₃ BaCO₃ (60-15-15-3-1-1-5) obtenue contient 4,5% en poids de Pt-Pd-Rh dans des ratios molaires de 10 :5 :1.

Le deuxième lot B" est traité de la même façon mais la poudre finale de Al₂O₃-TiO₂-CeO₂-ZrO₂-PrO₂-MgO-Al₂O₃ BaCO₃ (60-15-15-3-1-1-5) contient 0,5% en poids de Pt-Pd-Rh dans les mêmes ratios que précédemment.

Des dispersions aqueuses sont préparées avec les poudres issues des deux lots A" et B", contenant 40% en poids de matières solides. On utilise un monolithe en nid d'abeilles en cordiérite de 400 cpsi de 5,66" x 12,5 cm. Les 5 premiers cm du support monolithique sont revêtus de 180 g/l d'oxydes du premier lot A" par immersion partielle du support dans la dispersion de revêtement. Le revêtement est séché pendant 2 h à 120°C dans l'air. La deuxième partie non imprégnée du support est ensuite imprégnée de la même façon dans la dispersion issue du lot B" jusqu'au niveau 7,5 cm et le dépôt est arrêté au niveau du matériau issu du lot A", avec une imprégnation finale en lot B" de 300 g/l. le revêtement de la deuxième partie est séché pendant 2h à 120°C et l'ensemble est calciné pendant 2 h à 500°C.

### Exemple 14

Cet exemple utilise une brique monolithique unique en cordiérite et décrit un catalyseur 3 voies selon l'invention.

Deux lots de matériau catalytique sont préparés. Ils contiennent les composés Al₂O₃-TiO₂-CeO₂-ZrO₂-PrO₂-MgO-Al₂O₃ (60-10-25-3-1-1) et Pt-Pd-Rh (10-5-1).

Pour le premier lot A"', on prépare une dispersion aqueuse à 40% de solides, contenant par rapport aux matières sèches 60% en poids d'alumine (de surface spécifique 180 m²/g) et 10% de TiO₂ (surface spécifique 50 m²/g) en tant que washcoat de grande surface spécifique. A ce mélange on ajoute les matériaux actifs suivants, sous agitation constante : ZrO₂ (3%), CeO₂ (25%), MgO-Al2O3 (1 %), PrO₂ (1%). La dispersion est mise au contact d'une solution aqueuse de nitrate de tétraamineplatine(II), d'hydroxyde de tétraaminepalladium(II) et d'hydroxyde de diaminerhodium sous agitation constante, pour produire une poudre humide. Après séchage de 2 h à 120°C dans l'air, la poudre est calcinée pendant 2h à 300°C dans l'air. Une réduction dans un courant gazeux d'azote (95% en volume) et d'hydrogène (5% en volume) est effectuée à 500°C pendant 2h. La poudre Al₂O₃-TiO₂-CeO₂-ZrO₂-PrO₂-MgO-Al₂O₃ (60-10-25-3-1-1) obtenue contient 4,5% en poids de Pt-Pd-Rh dans des ratios molaires de 10 :5 :1.

Le deuxième lot B"' est traité de la même façon mais la poudre finale de Al₂O₃-TiO₂-CeO₂-ZrO₂-PrO₂-MgO-Al₂O₃ (60-10-25-3-1-1) contient 0,5% en poids de Pt-Pd-Rh dans les mêmes ratios que précédemment.

Des dispersions aqueuses sont préparées avec les poudres issues des deux lots A"' et B"', contenant 40% en poids de matières solides. On utilise un monolithe en nid d'abeilles en cordiérite de 600 cpsi de 5,66" x 12,5 cm. Les 5 premiers cm du support monolithique sont revêtus de 180 g/l d'oxydes du premier lot A"' par immersion partielle du support dans la dispersion de revêtement. Le revêtement est séché pendant 2 h à 120°C dans l'air. La deuxième partie non imprégnée du support est ensuite imprégnée de la même façon dans la dispersion issue du lot B"' jusqu'au niveau 7,5 cm et le dépôt est arrêté au niveau du matériau issu du lot A"', avec une imprégnation finale en lot B" de 300 g/l. le revêtement de la deuxième partie est séché pendant 2h à 120°C et l'ensemble est calciné pendant 2 h à 500°C.

## Revendications

1. Dispositif de traitement des émissions gazeuses d'un moteur à explosion, comportant un support destiné à être traversé par lesdites émissions gazeuses et ayant une face d'entrée et une face de sortie pour lesdites émissions, et un revêtement catalytique revêtant les parois internes du support, ledit revêtement comportant, comme composants catalytiques, entre 0 et moins de 100% de métaux précieux et entre plus de 0 et 100% d'un ou plusieurs oxydes catalytiques (MOₓ), **caractérisé en ce que** :
- ledit dispositif comporte une succession d'au moins deux zones entre sa face d'entrée et sa face de sortie, réparties selon la direction de progression des émissions gazeuses ;
- entre deux zones successives du dispositif, la quantité de métaux précieux dans le revêtement catalytique est décroissante.

2. Dispositif selon la revendication 1, **caractérisé en ce que**, dans la dernière zone du dispositif, les composants catalytiques du revêtement sont à 100% constitués d'oxydes MOₓ.

3. Dispositif selon la revendication 1 ou 2, **caractérisé en ce que**, entre au moins deux zones successives du dispositif, la quantité de métaux précieux décroît par paliers.

4. Dispositif selon l'une des revendications 1 à 3, **caractérisé en ce que** au moins à l'intérieur d'une zone de dispositif, la quantité de métaux précieux décroît de façon continue.

5. Dispositif selon l'une des revendications 1 à 4, **caractérisé en ce qu'**entre au moins deux zones successives du dispositif la quantité d'oxydes catalytiques MOₓ est croissante.

6. Dispositif selon l'une des revendications 1 à 5, **caractérisé en ce que** le support est composé d'une succession de briques de masses thermiques croissantes dans la direction de progression des émissions gazeuses.

7. Dispositif selon l'une des revendications 1 à 6, **caractérisé en ce que** lesdits métaux précieux sont choisis parmi Pt, Pd, Rh, Ru, Re, Ir, Au, Ag et leurs mélanges.

8. Dispositif selon l'une des revendications 1 à 7, **caractérisé en ce que** lesdits oxydes sont choisis parmi les oxydes de Sc, Ti, V, Cr, Mn, Fe, Co, Ni, Cu, Zn, Ce, Zr, Y, Pr et leurs mélanges.

9. Dispositif selon l'une des revendications 1 à 8, **caractérisé en ce qu'**il constitue un catalyseur d'oxydation totale.

10. Dispositif selon l'une des revendications 1 à 8, **caractérisé en ce qu'**il constitue un catalyseur de réduction catalytique sélective.

11. Dispositif selon l'une des revendications 1 à 8, **caractérisé en ce qu'**il constitue un piège à NOₓ, et **en ce que** lesdites nanoparticules sont dopées au B ou au Mn.

12. Dispositif selon l'une des revendications 1 à 8, **caractérisé en ce qu'**il constitue un catalyseur trois voies.

13. Dispositif selon l'une des revendications 1 à 5 et 7 à 12, **caractérisé en ce que** ledit support est un filtre à particules.

14. Dispositif selon l'une des revendications 1 à 12, **caractérisé en ce que** ledit support est une mousse.
